# EUROPÄISCHE PATENTSCHRIFT

(11) **EP 2 550 193 B1**
(45) Veröffentlichungstag und Bekanntmachung des Hinweises auf die Patenterteilung: **17.08.2016**
(21) Anmeldenummer: 11708822.9
(22) Anmeldetag: 14.03.2011
(51) Int. Cl.: B62D 5/04, F16H 25/22

(54) **SERVOLENKUNG**
SERVO STEERING APPARATUS
DIRECTION ASSISTÉE

(30) Priorität: 22.03.2010 DE 102010003105
(43) Veröffentlichungstag der Anmeldung: 30.01.2013
(73) Patentinhaber: Robert Bosch Automotive Steering GmbH, 73527 Schwäbisch Gmünd (DE)
(72) Erfinder: RUPP, Arthur, 73460 Hüttlingen (DE); TRUTHMANN, Steffen, 39108 Magdeburg (DE)
(86) Internationale Anmeldenummer: PCT/EP2011/053794
(87) Internationale Veröffentlichungsnummer: WO 2011/117099

(56) Entgegenhaltungen:
- WO-A1-02/076808
- WO-A1-2005/047735
- DE-A1-102004 058 963
- DE-A1-102007 049 114
- DE-A1-102008 001 959
- US-B1- 6 644 432

## Beschreibung

Die Erfindung betrifft eine Servolenkung, insbesondere eine Hilfskraftlenkung für ein Fahrzeug, mit einer, von einem Servomotor angetriebenen Bewegungsschraube aus einer axial unverschieblich in einem Gestell gelagerten Mutter und einem axial verschiebbaren Bauteil, gemäß dem Oberbegriff des Patentanspruches 1.

Servolenkungen, insbesondere elektrische Hilfskraftlenkungen bei Personenkraftwagen, deren Servomotor Drehzahl und Drehmoment über ein Zugmittelgetriebe auf eine Mutter, insbesondere eine Kugelumlaufmutter überträgt, sind aus dem Stand der Technik bekannt. Dabei ist ein Servomotor und die von der Mutter angetriebene Zahntange oder deren Spindelabschnitt häufig achsparallel angeordnet.

So beschreibt die DE 103 10 492 A1 eine elektrische Servolenkung, wobei ein Elektromotor ein axial verschiebbar in einem Lenkgetriebegehäuse gelagertes Bauteil antreibt. Das Bauteil ist als Zahnstange gebildet, und ein Kugelgewinde des Bauteiles ist in Eingriff mit einem Muttergewinde einer axial unverschieblich in dem als Lenkgetriebegehäuse gebildeten Gestell gelagert. Die Mutter ist mit einem Riemenrad eines Zugmittelgetriebes zwischen dem Servomotor und der so gebildeten Bewegungsschraube drehfest verbunden. Die Mutter ist über ein Radial-Festlager, ein Wälzlager, an dem Lenkgetriebegehäuse abgestützt und gelagert. Das Radiallager ist häufig als Vierpunktlager gebildet, da insbesondere auch Axialkräfte aufzunehmen sind. Ein Innenring des Wälzlagers stützt sich dabei axial an den auf der Mutter montierten Bauteilen, wie etwa dem Riemenrad und an einem Anschlag in Form eines Ringes oder Sprengringes ab.

Das Riemenrad ist aus einem Metallwerkstoff, sodass dessen Schallabstrahlung und - Leitung u.U. problematisch ist, zudem ist das Gewicht solcher Riemenräder nicht minimiert, woraus im Betrieb solcher Zugmittelgetriebe nicht minimierte Massenträgheitsmomente bei Drehung resultieren. Die bekannten Servolenkungen weisen ferner lange Toleranzketten auf, die nicht erwünscht sind.

Eine Servolenkung mit einem Kugelgewindetrieb wird ebenfalls in der WO 02/076808 A1 beschrieben, bei dem der Zahnriemenring aus einem Aluminiumwerkstoff oder Kunststoff besteht.

Weiterhin weisen die DE 10 2007 049 114 A1, die WO2005/047735 A1 und die DE10 2004 058 963 A1 Servolenkungen mit Kugelgewindemutter und auf dieser montiertem Antriebsrad auf.

So offenbart die DE 10 2007 049 114 A1 eine Servolenkung mit einer, von einem Servomotor angetriebene Bewegungsschraube aus einer axial unverschiebbar in einem Gestell gelagerten Mutter und einem axial verschiebbaren Bauteil, dessen Gewinde mit einem Muttergewinde der Mutter in Eingriff ist, und einem Zahnriemenrad, das drehfest mit der Mutter verbunden ist und Teil eines Zugmitteltriebs zwischen Servomotor und der Mutter ist, wobei die Mutter mit einem Wälzlager in dem Gestell gelagert ist und das Zahnriemenrad aus einem Kunststoff gebildet wird.

Der Erfindung liegt, ausgehend von diesem Stand der Technik, die Aufgabe zugrunde, eine Servolenkung anzugeben, die bei einer einfachen Montage eine geringe Geräuschbildung aufweist und sehr präzise im Betrieb und kostengünstig ist.

Die Aufgabe wird mit einer Servolenkung mit den Merkmalen des Patentanspruches 1 gelöst.

Dadurch dass ein Innenring des Wälzlagers an einem radial gerichteten, einstückig mit der Mutter gebildeten Anschlag und an einem Anschlag, der einstückig mit dem Riemenrad gebildet ist und in derselben Ebene wie der Anschlag der Mutter liegt, axial anliegt, wird eine konstruktive Maßnahme angegeben, die es ermöglicht, dass die Servolenkung präzise im Betrieb und einfach in der Montage ist. Zudem werden die Herstellungskosten der Servolenkung dadurch reduziert.

Bevorzuge Ausführungen ergeben sich aus den Unteransprüchen.

Der radial gerichtete Anschlag für den Innenring kann ein Umfangsbund der Mutter sein, der eine Anschlagsebene definieren kann, die deckungsgleich mit einer radial verlaufenden Stirnfläche des Riemenrades zu liegen kommt. Auf diese Weise lässt sich das Riemenrad axial in seiner anderen Richtung durch den Innenring als Gegenanschlag sichern. Der Innenring kommt so mit einem Axialanschlag der Mutter direkt in Kontakt, was die Toleranzkette im Vergleich zu Lösungen gemäß dem Stand der Technik verkürzt. Das Riemenrad kann dabei auf die Mutter aufgeschoben werden und mit einer radial formschlüssigen Verbindung, wie einer Keil- oder_Zahnwellenverbindung, die auch lediglich durch zwei ineinandergreifende Nuten und Federn an den betreffenden Bauteilen darstellbar ist, mit der Mutter verbunden sein. Jede anderer drehfeste Verbindung, die durch eine Wellenverbindung gebildet ist, die von der Kreisform abweichende Querschnitte aufweist, (z.B. Polygonverbindung), ist ebenso anwendbar. Es kann auch zweckmäßig sein, das Riemenrad auf die Mutter als Kunststoff - Spritzgussteil auf die Mutter aufzuspritzen oder in anderer Weise stoffschlüssig und formschlüssig mit der Mutter zu verbinden.

Für die Herstellung des Riemenrades empfiehlt sich die Anwendung von technischen Kunststoffen, wie Polyamid, Polyoxymethylen oder Polyethylenterephtalat. Polyamide (PA) sind die wichtigsten technischen Kunststoffe deren Grundbaustein durch Carbonsäureamidgruppen miteinander verknüpft sind. Man unterscheidet zwei Gruppen von Polyamiden: Polyamid -6-Typ, dessen Grundstoff durch Polykondensation von ω - Aminocarbonsäuren oder Polymerisaten ihrer Lactame entstehen.

Polyamid 66-Typ, dessen Grundstoff durch Polykondensation von Diaminen und Dicarbonsäuren entstanden ist. Unterschiede zwischen den verschiedenen Polyamiden werden durch unterschiedliche Kristallinität, das Verhältnis von CH₂-/CONH - Gruppen in den Polymeren, gerad- oder ungeradzahliger C-Atomzahl und dem Abstand benachbarter Makromoleküle und damit durch den Kristallinitätsgrad hervorgerufen. Polyamide können in ihren Eigenschaften, wie Biegefestigkeit, Oberflächenhärte etc. durch Additive wie Glasfasern, Glaskugeln, Mineralpulver, Kohlenstoff-Fasern oder auch Graphit und Molybdänsulfid stark beeinflußt werden. Teilkristalline Polyamide besitzen hohe bis mittlere Festigkeit und mittlere Steifigkeit, geringe Härte, gute bis ausgezeichnete Schlagzähigkeit sowie gute Gleit- und Verschleißeigenschaften. Polyoxymethylen (POM) besitzt mittlere bis hohe Festigkeit (Wechselfestigkeit) und Steifigkeit und eignet sich für die Herstellung eng tolerierter Bauteile wie Zahnräder und dergleichen. Polyethylenterephtalat (PET) weist eine hohe Steifigkeit und Härte und hohe Abriebfestigkeit auf. Zudem eine geringe Wärmedehnung und eignet sich gut für die Herstellung eines erfindungsgemäßen Riemenrades.

Hochleistungskunststoffe wie Polyaryletherketone, wie Polyetheretherketon oder Polyetherketon, weisen eine hohe mechanische Wechselfestigkeit und gutes Gleit- und Verschleißverhalten auf. Sie behalten ihre guten Festigkeitseigenschaften bis zu Temperaturen von über 250 °C bei.

Das Riemenrad kann fliegend an der Mutter festgelegt sein, sodaß es beispielsweise zur Hälfte seiner axialen Erstreckung auf der Mutter festgelegt ist. Ein Teil der Lauffläche des Riemens ist außerhalb des Axialbereiches der Mutter, wobei Verstärkungsrippen an dem Riemenrad für die notwendige Steifigkeit sorgen und bei der Herstellung des Riemenrades etwa durch Spritzgießen mitausgeformt werden können. Das Riemenrad kann auch über nur etwa 1/3 seiner axialen Länge auf der Mutter festgelegt sein. Die Servolenkung ist bevorzugt als elektrische Servolenkung mit achsparalleler Anordnung von Servomotor und Zahnstange gebildet.

### Bezugszeichenliste

- 1: Servolenkung
- 2: Bewegungsschraube
- 3: Gestell
- 4: Mutter
- 5: Bauteil, axial verschiebbar
- 6: Gewinde
- 7: Muttergewinde
- 8: Riemenrad
- 9: Wälzlager
- 10: Innenring
- 11: Anschlag
- 12: Anschlag
- 13: Ebene
- 14: Stirnfläche, v. 11
- 15: Stirnfläche, v. 12
- 16: Nut- Feder Verbindung
- 17: Axialanschlag
- 18: Zahnstangen- Hilfskraftlenkung
- 19: Lenkgetriebegehäuse
- 20: Zahnstange
- 21: Spindelabschnitt
- 22: Kugelgewinde
- 23: 23' Lagerscheibe
- 24: Verstärkungsrippe
- 25: Flanschbereich
- 26: 26' Feder
- 27: Nut
- 28: Bund
- 29: Verzahnung, an 8

- X: Montagerichtung
- I: Erstreckung, axial
- d₁: Aussendurchmesser, v. 4
- d₂: Aussendurchmesser, v. 4
- d₃: Aussendurchmesser, v. 4

Die Erfindung wird nun näher anhand eines Ausführungsbeispiels beschrieben und anhand der beiliegenden Zeichnung wiedergegeben.

In der Zeichnung zeigt:
- Fig. 1: einen teilweisen schematischen Längsschnitt durch eine erfindungsgemäße Servolenkung,
- Fig.1a: einen Ausschnitt I in Fig. 1,
- Fig. 2: eine perspektivische Ansicht eines Ausführungsbeispiels eines Riemenrades aus Kunststoff,
- Fig. 3: eine perspektivische Ansicht des Riemenrades in Fig. 2 von seiner Montageseite auf der Mutter.

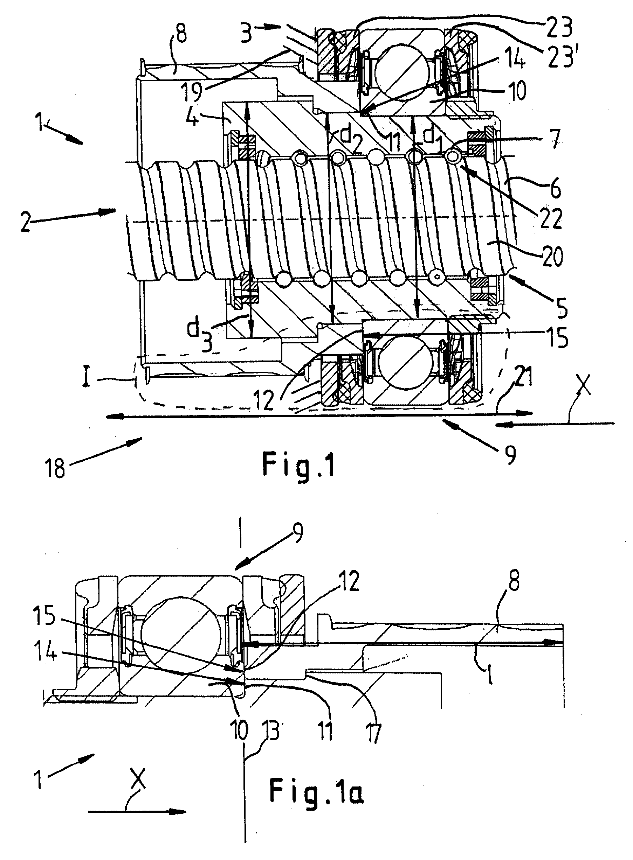

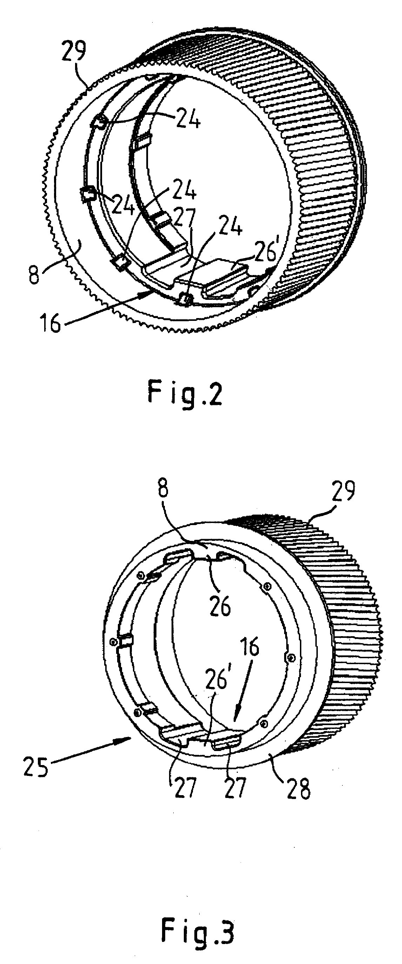

In Fig. 1 ist in einem teilweisen Längsschnitt eine als elektrische Zahnstangen-Hilfskraftlenkung 18 gebildete Servolenkung 1 für einen Personenkraftwagen oder einen Nutzkraftwagen gezeigt. In einem als zylinderförmigen Lenkgetriebegehäuse 19 gebildeten Gestell 3 ist ein als Zahnstange 20 gebildetes, axial verschiebbares Bauteil 5 gelagert. Parallel zu der Zahnstange 20 ist an einem Radialflansch des Lenkgetriebegehäuses 19 ein nicht gezeigter elektrischer Servomotor festgelegt. Die Zahnstange 20 kämmt an einem nicht gezeigten Verzahnungsabschnitt mit einem nicht gezeigten Ritzel an einer Lenkwelle und weist an einem Spindelabschnitt 21 ein als Kugelgewinde 22 gebildetes Gewinde 6 auf, welches in Eingriff mit einem als Kugelumlaufgewinde gebildeten Muttergewinde 7 einer Mutter 4 ist. Die Mutter 4 und der Spindelabschnitt 21 bilden eine Bewegungsschraube 2. Die Mutter 4 ist drehfest mit einem als Zahnscheibe (vgl. Fig. 2,3) gebildeten Riemenrad 8 verbunden und über ein als Radiallager gebildetes Wälzlager 9 in einem nicht gezeigten Gehäusedeckel des Lenkgetriebegehäuses 19 gehalten. Das Wälzlager 9 ist als Festlager gebildet und vermag axiale und radiale Kräfte von der Mutter 4 auf das Gestell 3 zu übertragen.

Die Mutter 4 weist an ihrem Aussenumfang, wie dies auch in einer Einzelheit I in Fig. 1 a gezeigt ist, zwei Durchmessersprünge auf, zwischen denen die Kontur der Mutter 4 zylinderartig ist. Von ihrer Aussenumfangsseite betrachtet, bildet die Mutter 4 einen Stufenzylinder. Im Radialbereich des Wälzlager 9 ist der Aussendurchmesser d₁ der Mutter 4 am kleinsten. Er entspricht dem Innendurchmesser eines Innenringes 10 des Wälzlagers 9. Der Innenring 10 ist von einer Montagerichtung X in Betrachtungsrichtung der Figur 1 von rechts nach links auf die Mutter 4 geschoben und liegt an einer Stirnfläche 14 des, einen Anschlag 11 bildenden ersten Durchmessersprunges an. In dem Bereich des Anschlages 11 hat die Mutter 4 einen Aussendurchmesser d₂, der dem ersten Aussendurchmesser d₁ zuzüglich etwa der Hälfte der Dicke des Innenringes 10 entspricht. In Betrachtungsrichtung weiter links ist an der Aussenumfangsfläche der Mutter 4 ein weiterer Durchmessersprung zu einem größeren Durchmesser d₃, wobei die Durchmesserzunahme zu d₃ etwa halb so groß wie die Durchmesserzunahme von d₁ zu d₂ sein kann, wie Fig. 1 a verdeutlicht.

Der zweite Durchmessersprung von einem Außendurchmesser d₂ zu d₃ dient als Axialanschlag 17 für das Riemenrad, das dadurch so auf der Mutter 4 zu liegen kommt, dass seine Stirnfläche 15 in einer Ebene 13 mit der Stirnfläche 14 der Mutter 4 am ersten Durchmessersprung zu liegen kommt.

Auf diese Wiese kann zunächst bei der Montage das Riemenrades 8 mit der Montagerichtung X auf die Mutter 4 geschoben werden und anschließend in derselben Montagerichtung X das Wälzlager 9 aufgeschoben werden bis zum Anschlag des Innenringes 10 an der Stirnfläche 14 oder Anschlag 11 der Mutter 4 und gleichzeitig an der Stirnfläche 15 oder Anschlag 12 an dem Riemenrad 8.

Durch axial zu beiden Seiten des Wälzlagers 9 angeordnete Lagerscheiben 23,23' wird das Wälzlager 9 auf der Mutter 4 fixiert. Das Riemenrad 8 ist etwa zur Hälfte seiner axialen Erstreckung I über die Mutter 4 gestülpt. Die andere Hälfte des Riemenrades 8, auf der ein Zugmittel, insbesondere ein Zahnriemen abläuft, ist fliegend angeordnet. Dies ist möglich, da wie Fig. 2 zeigt, Versteifungsrippen 24 radial um den Innenumfang des Riemenrades 8 ausgeformt sind, die keilförmig sich verjüngend von dem eigentlichen Flanschbereich 25 des Riemenrades 8 abragen und die Lauffläche des Zugmittels aussteifen helfen.

Wie insbesondere Fig. 3 in einer perspektivischen Ansicht des Riemenrades 8 von seiner Flanschseite aus zeigt, ist eine Nut- und Feder -Verbindung 16 zwischen der Mutter 4 und dem Riemenrad 8 vorgesehen, wobei eine breite Feder 26 diametral zu einer Feder 26' aus der Innenumfangsfläche des Riemenrades 8 ausgeformt ist, zum drehschlüssigen Eingriff in jeweils eine Nut an dem Außenumfang der Mutter 4.

Die Federn 26,26' sind wiederum von jeweils einer Nut 27 seitlich begrenzt, in die jeweils zwei Federn an der Mutter 4 eingreifen können. Es ergibt sich so eine formschlüssig lösbare, drehfeste Verbindung von Riemenrad 8 und Mutter 4 in der Art einer Zunge-Gabel-Verbindung.

Zu seiner Flanschseite 25 hin weist das Riemenrad 8 einen Bund 28 auf, während ein axial gegenüberliegendes Ende des Riemenrades 28 in seiner Verzahnung 29 ohne Bund ausläuft.

## Patentansprüche

1. Servolenkung, insbesondere Hilfskraftlenkung für ein Fahrzeug, mit einer, von einem Servomotor angetriebenen Bewegungsschraube (2) aus einer axial unverschieblich in einem Gestell (3) gelagerten Mutter (4) und einem axial verschiebbaren Bauteil (5) dessen Gewinde (6) mit einem Muttergewinde (7) der Mutter (4) in Eingriff ist, und mit einem Riemenrad (8), das drehfest mit der Mutter (4) verbunden ist und Teil eines Zugmittelgetriebes zwischen dem Servomotor und der Mutter (4) ist, wobei die Mutter (4) mit einem Wälzlager (9) in dem Gestell (3) gelagert ist, wobei das Riemenrad (8) aus einem Kunststoff gebildet ist, **dadurch gekennzeichnet, dass** ein Innenring (10) des Wälzlagers (9) an einem radial gerichteten, einstückig mit der Mutter (4) gebildeten Anschlag (11) und an einem Anschlag (12), der einstückig mit dem Riemenrad (8) gebildet ist und in derselben Ebene (13) wie der Anschlag (11) der Mutter (4) liegt, axial anliegt.

2. Servolenkung nach Anspruch 1 , **dadurch gekennzeichnet, dass** der Anschlag (11) der Mutter (4) und der Anschlag (12) des Riemenrades (8) für den Innenring (10) konzentrisch aufeinander angeordnete Ring- Stirnflächen (14,15) sind.

3. Servolenkung nach einem der Ansprüche 1 bis 2, **dadurch gekennzeichnet, dass** das Riemenrad (8) über eine radial formschlüssige Verbindung, wie eine Keilwellen- oder Zahnwellen- oder eine andere Nut- Federverbindung (16) mit der Mutter (4) verbunden ist oder stoffschlüssig mit der Mutter (4) verbunden ist.

4. Servolenkung nach einem der Ansprüche 1 bis 3, **dadurch gekennzeichnet, dass** das Riemenrad (8) in derselben Montagerichtung (X) wie das Wälzlager (9) auf die Mutter (4) bis an einen ringförmigen Axialanschlag (17) der Mutter (4) geschoben ist.

5. Servolenkung nach einem der Ansprüche 1 bis 4, **dadurch gekennzeichnet, dass** das Riemenrad (8) aus einem technischen Kunststoff wie Polyamid, Polyoxymethylen, Polyethylenterephtalat oder einem Hochleistungskunststoff wie Polyetheretherketon oder Polyetherketon gebildet ist und als Keilriemen-Keilrippenriemen - oder Zahnriemenrad gebildet ist.

6. Servolenkung nach einem der Ansprüche 1 bis 5, **dadurch gekennzeichnet, dass** das Riemenrad (8) etwa über die Hälfte seiner axialen Erstreckung (I) über die Mutter (4) ragt.

7. Servolenkung nach einem der Ansprüche 1 bis 6, **dadurch gekennzeichnet, dass** das Riemenrad (8) etwa über 1/3 seiner axialen Erstreckung (I) auf der Mutter (4) aufliegt.

8. Servolenkung nach einem der Ansprüche 1 bis 7, **dadurch gekennzeichnet, dass** die Servolenkung (1) eine elektrische Hilfskraftlenkung mit achsparalleler Anordnung von axial verschiebbarem Bauteil (5) und Servomotor ist.

## Claims

1. Servo steering system, in particular power steering system for a vehicle, having a motion screw (2) which is driven by a servo motor and which is composed of a nut (4) which is mounted in axially non-displaceable fashion in a frame (3), and having an axially displaceable component (5), whose thread (6) engages with a nut thread (7) of the nut (4), and having a belt pulley (8) which is connected rotationally conjointly to the nut (4) and which is part of a traction mechanism drive between the servo motor and the nut (4), wherein the nut (4) is mounted in the frame (3) by way of a rolling bearing (9), wherein the pulley (8) is formed from a plastic, **characterized in that** an inner ring (10) of the rolling bearing (9) bears axially against a radially directed stop (11), which is formed integrally with the nut (4), and against a stop (12) which is formed integrally with the belt pulley (8) and which lies in the same plane (13) as the stop (11) of the nut (4).

2. Servo steering system according to Claim 1, **characterized in that** the stop (11) of the nut (4) and the stop (12) of the belt pulley (8) for the inner ring (10) are ring end faces (14, 15) which are arranged concentrically one above the other.

3. Servo steering system according to either of Claims 1 and 2, **characterized in that** the belt pulley (8) is connected to the nut (4) by way of a radially positively locking connection, such as a spline-shaft or toothed-shaft connection or some other tongue-and-groove connection (16), or is connected to the nut (4) cohesively.

4. Servo steering system according to one of Claims 1 to 3, **characterized in that** the belt pulley (8) is pushed onto the nut (4), in the same mounting direction (X) as the rolling bearing (9), as far as a ring-shaped axial stop (17) of the nut (4).

5. Servo steering system according to one of Claims 1 to 4, **characterized in that** the belt pulley (8) is composed of a technical plastic such as polyamide, polyoxymethylene, polyethylene terephthalate, or a high-performance plastic such as polyether ether ketone or polyether ketone, and is formed as a V-belt pulley, poly-V-belt pulley or toothed belt pulley.

6. Servo steering system according to one of Claims 1 to 5, **characterized in that** the belt pulley (8) projects, over approximately half of its axial extent (I), beyond the nut (4).

7. Servo steering system according to one of Claims 1 to 6, **characterized in that** the belt pulley (8) lies, over approximately 1/3 of its axial extent (I), on the nut (4).

8. Servo steering system according to one of Claims 1 to 7, **characterized in that** the servo steering system (1) is an electrical power steering system with an axially parallel arrangement of axially displaceable component (5) and servo motor.

## Revendications

1. Direction assistée, en particulier servodirection pour un véhicule, avec une vis de commande (2) entraînée par un servomoteur composée d'un écrou (4) monté en position axialement stationnaire dans un bâti (3) et d'un composant déplaçable axialement (5), dont le filet (6) engrène avec un filet d'écrou (7) de l'écrou (4), et avec une poulie à courroie (8) qui est calée en rotation avec l'écrou (4) et qui fait partie d'une transmission par traction entre le servomoteur et l'écrou (4), dans laquelle l'écrou (4) est monté dans le bâti (3) avec un palier de roulement (9), dans lequel la poulie à courroie (8) est formée en une matière plastique, **caractérisée en ce qu'**une bague intérieure (10) du palier de roulement (9) est appliquée axialement sur une butée (11) orientée radialement et formée d'une seule pièce avec l'écrou (4) et sur une butée (12), qui est formée d'une seule pièce avec la poulie à courroie (8) et qui est située dans le même plan (13) que la butée (11) de l'écrou (4).

2. Direction assistée selon la revendication 1, **caractérisée en ce que** la butée (11) de l'écrou (4) et la butée (12) de la poulie à courroie (8) pour la bague intérieure (10) sont des faces frontales (14, 15) de la bague disposées de façon concentrique l'une à l'autre.

3. Direction assistée selon l'une des revendications 1 à 2, **caractérisée en ce que** la poulie à courroie (8) est reliée à l'écrou (4) par un assemblage à emboîtement radial, comme un assemblage à arbre cannelé ou à arbre denté ou un autre assemblage par rainure et clavette (16) ou est assemblée à l'écrou (4) par une liaison matérielle.

4. Direction assistée selon l'une quelconque des revendications 1 à 3, **caractérisée en ce que** la poulie à courroie (8) est glissée sur l'écrou (4), jusqu'à une butée axiale annulaire (17) de l'écrou (4), dans la même direction (X) que le palier de roulement (9).

5. Direction assistée selon l'une quelconque des revendications 1 à 4, **caractérisée en ce que** la poulie à courroie (8) est formée en une matière plastique technique, comme le polyamide, le polyoxyméthylène, le polyéthylène téréphtalate ou une matière plastique à haute performance comme la polyétheréthercétone ou la polyéthercétone et est réalisée sous forme de poulie pour courroie trapézoïdale, pour courroie trapézoïdale à nervures ou pour courroie dentée.

6. Direction assistée selon l'une quelconque des revendications 1 à 5, **caractérisée en ce que** la poulie à courroie (8) s'étend sur l'écrou (4) environ sur la moitié de son extension axiale (I).

7. Direction assistée selon l'une quelconque des revendications 1 à 6, **caractérisée en ce que** la poulie à courroie (8) s'étend sur l'écrou (4) sur environ 1/3 de son extension axiale (I).

8. Direction assistée selon l'une quelconque des revendications 1 à 7, **caractérisée en ce que** la direction assistée (1) est une servodirection électrique avec un agencement à axes parallèles du composant déplaçable (5) et du servomoteur.
